# EUROPÄISCHE PATENTANMELDUNG

(11) **EP 2 886 417 A1**
(43) Veröffentlichungstag der Anmeldung: **24.06.2015**
(21) Anmeldenummer: 14193856.3
(22) Anmeldetag: 19.11.2014
(51) Int. Cl.: B62B 3/14

(54) **Transportwagen**

(30) Priorität: 18.12.2013 DE 102013114299
(71) Anmelder: Wanzl Metallwarenfabrik GmbH, 89340 Leipheim (DE)
(72) Erfinder: Kraus, Bernd, 89356 Haldenwang (DE); Gasche, Thomas, 89340 Leipheim (DE)

(57) **Zusammenfassung**

Die Erfindung betrifft einen von Hand bewegbaren, stapelbaren Transportwagen mit einem Fahrgestell (2) an dem Rollen (3) und eine Ladeplattform (7) angeordnet sind, wobei das Fahrgestell (2) ferner zwei an der Rückseite (6) des Wagens (1) befindliche, nach oben gerichtete Holme (4) aufweist, an denen eine Schiebeeinrichtung (5) angebracht ist, wobei die Ladeplattform (7) mit Öffnungen (8) versehen ist.

Die Erfindung zeichnet sich dadurch aus, dass in die Öffnungen (8) Bauteile (9) eingesetzt werden können.

## Beschreibung

Die Erfindung betrifft einen von Hand bewegbaren, stapelbaren Transportwagen mit den Merkmalen im Oberbegriff des Hauptanspruchs.

Ein solcher stapelbarer, von Hand bewegbarer Transportwagen ist beispielsweise aus dem deutschen Patent DE 10 2006 043 522 B3 bekannt. Der Wagen weist ein Fahrgestell auf, an dem Rollen und eine Plattform angeordnet sind. An der Rückseite des Wagens sind zwei nach oben gerichtete Holme vorgesehen, an denen eine Schiebeeinrichtung angebracht ist. Die Ladeplattform ist aus einem Kunststoff hergestellt und weist Öffnungen auf.

Aus der DE 10 200 8045 144 A1 ist ferner ein stapelbarer, von Hand bewegbarer Transportwagen bekannt. Dieser Wagen weist eine Plattform auf. Die Plattform ist im Bereich der Holme an dem Fahrgestell angeordnet.

Die Aufgabe der vorliegenden Erfindung besteht darin, die Ladeplattform eines Transportwagens mit Öffnungen zu verbessern.

Die Erfindung löst die Aufgabe mit den Merkmalen im Hauptanspruch. Weitere vorteilhafte Ausführungen sind in den Unteransprüchen beschrieben.

Die Öffnungen der Ladeplattform, die üblicherweise vorgesehen sind um den Materialeinsatz möglichst gering zu halten, können bei Bedarf mittels explizit hierfür konzipierter Bauteile ausgefüllt werden.

Hierbei bieten sich verschiedene Ausführungsformen an Bauteilen an. Je nach Anforderung können eine oder mehrere Öffnungen der Plattform ausgefüllt werden.

Zudem ist je nach Kundenwunsch auch eine farbliche Gestaltung möglich. Auch kann ein solches Bauteil ein Kundenlogo aufweisen.

Die Bauteile können je nach Anforderung wechselbar oder auch ortsfest in die Plattform eingebracht werden. Es bietet sich an, ein Montagewerkzeug insbesondere für die Demontage der Bauteile zu verwenden.

Hierbei ist die Form der Bauteile frei wählbar. Vorzugsweise, wie auch in den Beispielen dargestellt, wird eine quadratische Form gewählt. Aber auch z.B. dreieckige oder kreisförmige Formen sind denkbar.

Die Bauteile können, wie auch die Plattform selbst, aus einem preisgünstigen Kunststoff wie z.B. einem PP oder PA mittels eines Spritzgussverfahrens hergestellt werden.

Die Erfindung wird anhand eines Ausführungsbeispiels näher erläutert. Es zeigt
- Fig. 1: einen Transportwagen mit einer Ladeplattform mit Öffnungen und Bauteilen in perspektivischer Ansicht;
- Fig. 2: ein Bauteil, ausgeführt als Abdeckteil, seitlich von oben;
- Fig. 3: dasselbe Bauteil, ausgeführt als Abdeckteil, seitlich von unten;
- Fig. 4: ein weiteres Bauteil, ausgeführt als Abdeckteil, seitlich von oben;
- Fig. 5: ein Bauteil, ausgeführt als Behälterteil, seitlich von oben;
- Fig. 6: ein weiteres Bauteil, ausgeführt als Behälterteil, seitlich von oben;
- Fig. 7: ein Bauteil, ausgeführt als Anti-Rutschteil, seitlich von oben;
- Fig. 8: ein Bauteil, ausgeführt als Stützteil, seitlich von oben;
- Fig. 9: das Stützteil in Draufsicht,
- Fig. 10: das Stützteil in Seitenansicht,
- Fig. 11: das Stützteil in einer weiteren Seitenansicht,
- Fig. 12: das Stützteil in einer Schnittdarstellung (Schnitt A-A)
- Fig. 13: das Stützteil in einer weiteren Schnittdarstellung (Schnitt B-B)

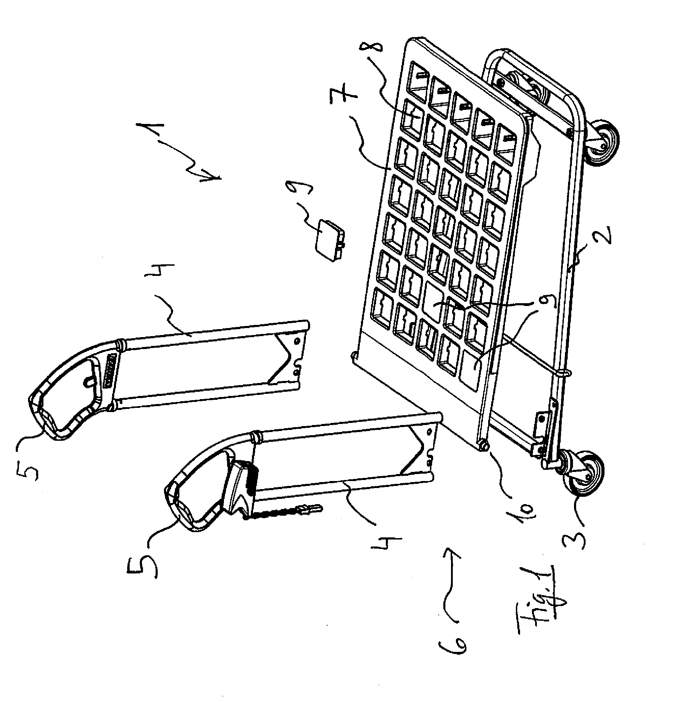

Die Erfindung betrifft einen von Hand bewegbaren und stapelbaren Transportwagen 1 wie er in Figur 1 dargestellt ist. Der Wagen 1 ist von Hand bewegbar und in gleiche andere Wagen stapelbar. Er weist ein Fahrgestell 2 auf, an dem Rollen 3 und eine Ladeplattform 7 angeordnet sind. Das Fahrgestell 2 weist ferner zwei an der Rückseite 6 des Wagens 1 befindliche, nach oben gerichtete Holme 4 auf. An den Holmen 4 ist eine Schiebeeinrichtung 5 angebracht. Die Ladeplattform 7 ist mit Öffnungen 8 versehen. Wie ebenfalls in Figur 1 gezeigt ist, können in die Öffnungen 8 Bauteile 9 eingesetzt werden.

Die Ladeplattform 7 ist in das Fahrgestell 2 im Bereich der Rückseite 6 und der hinteren Rollen 3 eingelegt und wird mittels der Holme 4, und nicht näher dargestellten Befestigungsmitteln fixiert. Hierfür weist die Plattform 7 einer Querverstrebung 10 auf. Diese Querverstrebung 10 kann entweder vor dem Herstellungsprozess, vorzugsweise einem Spritzgussverfahren, direkt in die Form eingelegt und somit umspritzt werden; alternativ wird die Querverstrebung 10 nach dem Spritzgussprozess in eine in der Plattform 7 hierfür vorgesehene Öffnung eingeschoben. Die Querverstrebung 10 kann hierbei ein oder zweiteilig ausgeführt sein.

Ferner kann in diesem Bereich der Plattform 7 eine Fläche ohne Öffnungen 8 vorgesehen sein. Dieses Feld kann Verwendung z.B. für Klebestreifen finden, auf denen Informationen angebracht sein können.

Die Bauteile 9 sind wechselbar oder ortsfest in den Öffnungen 8 angeordnet. In Figur 1 ist die Plattform 7 dargestellt und zeigt einzelne Bauteile 9, die in die Öffnungen 8 der Plattform 7 eingebracht sind. Die Anzahl der Öffnungen 8, die die Plattform 7 aufweist, ist beliebig. Im vorliegenden Beispiel weist die Ladeplattform 7 35 Öffnungen auf, wobei vorzugsweise 5 quer und 7 längs vorgesehen sind. Eine andere Anordnung ist denkbar und beliebig zu gestalten.

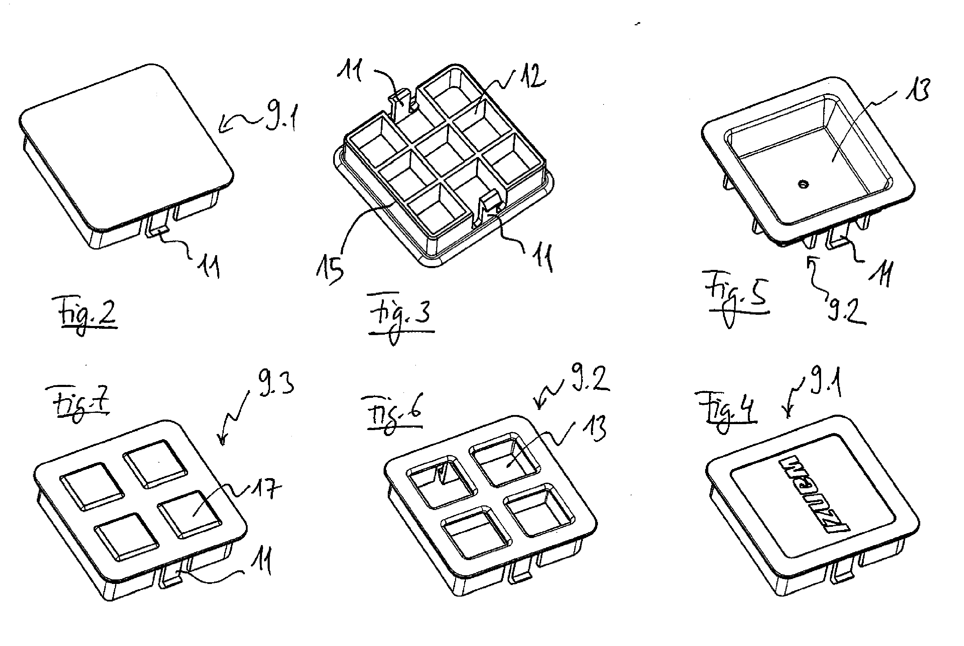

Sofern die Bauteile 9 wechselbar ausgeführt sind, bietet es sich an, diese mittels eines Demontagewerkzeugs demontieren zu können. Die Figuren 2 bis 8 zeigen mögliche Ausführungsformen von Bauteilen 9. Diese sind alle wechselbar ausgeführt. Hierfür weisen sie an der Seite einen oder mehrere Halteclips 11 auf. Wie z.B. in Figur 3 dargestellt, befinden sich zwei Halteclips 11 gegenüberliegend an der Unterseite des Bauteils 9. Diese sind mittig angeordnet und ersetzen einen Teil der umlaufenden seitlichen Wandung 15.

Die Anzahl solcher Halteclips 11 ist beliebig. Gleiches gilt für die Breite der Halteclips 11. Denkbar wäre, dass sich ein solcher Halteclip 11 auch entlang einer kompletten Seite erstreckt.

Es hat sich als vorteilhaft erwiesen, die Ladeplattform 7 und/oder die Bauteile 9 aus PP oder PA herzustellen. Zur kostengünstigen Herstellung von Ladeplattform 7 und/oder Bauteil 9 bietet sich ein Spritzgussverfahren an.

Zudem wäre denkbar, dass die Ladeplattform 7 eine Versteifung in Längsrichtung aufweist. Z.B. könnten ohne großen Aufwand, sofern notwendig, Verstärkungsstreben aus Metall Verwendung finden. Diese können ebenfalls im Fertigungsprozess eingebracht werden oder aber nachträglich an der Unterseite der Ladeplattform 7 befestigt werden.

Ferner weist die Ladeplattform 7 an ihrer Unterseite eine Stütze auf, die als so genannte Auflauframpe beim Stapeln in einen weiteren vorderen, nicht näher dargestellten, Wagen zweckmäßig ist.

Die in den Figuren 1 bis 13 dargestellten Bauteile 9 sind quadratisch ausgeführt. Eine Kantenlänge von ca. 80 mm hat sich als sinnvoll erwiesen. Es sind aber auch andere geometrische Formen denkbar, wie z.B. rechteckige, kreisförmige, dreieckige oder weitere Formen.

Zudem können die Bauteile 9 farblich gestaltet sein. Es bietet sich beispielsweise als Corporate Identity an, die Bauteile 9 an einer bestimmten Stelle in der Farbe des Marktes, in dem die Wagen Einsatz finden sollen, anzuordnen. Auch könnte ein Bauteil 9 für ein Firmenlogo Verwendung finden. (Vgl. Fig. 4)

Um ferner den Einbau zu erleichtern, sind die Ecken der Bauteile 9 radial angepasst. Es hat sich als sinnvoll erwiesen, hierbei eine der Ecken mit einem anderen, vorzugsweise mit einem größeren Radius zu versehen. Dadurch sind die Bauteile 9 immer nur in einer Position einbaubar. Es versteht sich von selbst, dass die Plattform 7 entsprechend, die gleichen Radien in den Ecken der Öffnungen 8 aufweist.

Die Bauteile 9 können mit unterschiedlichen Funktionen ausgestattet sein. Z.B. können die Bauteile 9 als Abdeckteil 9.1, Behälterteil 9.2, Anti-Rutschteil 9.3 oder Stützteil 9.4 ausgeführt sein und in den Öffnungen 8 nach Belieben Einsatz finden.

Die in Figur 1 dargestellten Bauteile 9 sind als Abdeckteile 9.1 ausgeführt. Ein solches ist auch in den Figuren 2 und 3 gezeigt. Das Abdeckteil 9.1 weist eine ebene Oberfläche auf. Es schließt bündig auf einer Ebene mit der Oberfläche der Plattform 7 ab.

Die Unterseite des Bauteils 9, wie in Figur 3 dargestellt, weist Verstrebungen 12 auf. Ferner ist ein Rand vorgesehen, so dass das Bauteil 9 in einfacher Weise in eine der Öffnungen 8 der Plattform 7 eingebracht werden kann. Die Höhe des Randes, die als Wandung 15 ausgeführt ist, richtet sich nach der Stärke der Plattform 7. Eine Höhe von ca. 20 bis 30 mm hat sich als vorteilhaft erwiesen. Ferner sind zwei Halteclips 11 vorgesehen. Diese sind vorzugsweise mittig ausgeführt. Sowohl die Anzahl, als auch die Breite sowie die genaue Positionierung der Halteclips 11 ist beliebig.

Die Figuren 5 und 6 zeigen ein Behälterteil 9.2. Figur 5 offenbart ein Behälterteil mit nur einem Behälter 13, in der Variante, die in Figur 6 dargestellt ist, sind vier Behälter 13 vorgesehen. Ein Behälterteil 9.2 mit einer anderen Anzahl an Behältern 13 wäre denkbar. Vorzugsweise sind die Behälterteile 9.2 einteilig gebildet und weisen sowohl Halteclips 11, eine Wandung 15 als auch Verstrebungen 12 auf.

Figur 7 zeigt ein Anti-Rutschteil 9.3. Dieses weist vier Bereiche 17 auf, die ein Rutschen einer nicht näher dargestellten Ware verhindern. Das Anti-Rutschteil 9.3 kann aus dem gleichen Material hergestellt sein wie die Plattform 7. Es hat sich als vorteilhaft erweisen, für die Anti-Rutschbereiche 17 ein anderes, vorzugsweise ein elastischeres Material einzusetzen. Eine andere Anzahl an Anti-Rutschbereichen 17 wäre denkbar. Um eine optimale Anti-Rutschwirkung zu erhalten, ragen die Anti-Rutschbereiche 17 ein wenig über die Oberfläche von Plattform 7 und das Anti-Rutschteil 9.3 heraus.

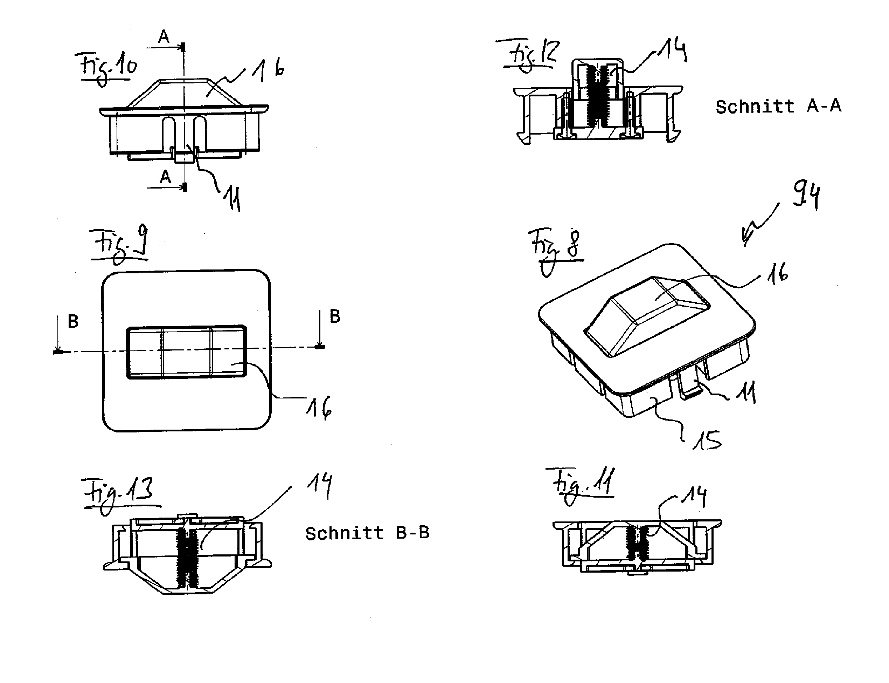

Ferner zeigen die Figuren 8 bis 13 in verschiedenen Ansichten eine weitere Ausführung eines Bauteils 9. Dieses ist als Stützteil 9.4 ausgeführt. Mittig ist ein bewegliches Mittelteil 16 vorgesehen, das Waren oder andere Gegenstände gegen ein Umkippen bzw. Herunterfallen von der Plattform 7 stützen soll. Dieses Mittelteil 16 ist an dem Korpus des Stützteils 9.4 mittels einer Feder 14 beweglich angebracht. Es kann durch äußere Krafteinwirkung nach unten gedrückt werden, so dass der Korpus des Stützteils 9.4 und das Mittelteil 16 eine Ebene bilden. (vgl. Fig. 11) Um als Stützteil 9.4 eine Funktion ausüben zu können, ragt das Mittelteil 16 in Gebrauchslage über die Ebene des Stützteils 9.4 und somit auch über die Ebene der Plattform 7 heraus. Die Form einer Pyramide - wobei keine Spitze, sondern eine flache Fläche den Abschluss bildet - hat sich als vorteilhaft erwiesen (Vgl. Fig. 10).

Die Draufsicht in Figur 9 zeigt das Flächenverhältnis von dem kompletten Stützteil 9.4 zu dem Mittelteil 16. Ferner sind in den beiden Schnittdarstellungen 12 und 13 die beiden verschiedenen Positionen und die Wirkweise der Feder 14 verdeutlicht. Wiederum sind Halteclips 11 vorgesehen, die als Teil der Wandung 15 ausgeführt sind.

### Bezugszeichenliste

- 1: Transportwagen, Wagen
- 2: Fahrgestell
- 3: Rolle
- 4: Holm
- 5: Schiebeeinrichtung
- 6: Rückseite
- 7: Ladeplattform, Plattform
- 8: Öffnung
- 9: Bauteil
- 9.1: Abdeckteil
- 9.2: Behälterteil
- 9.3: Anti-Rutschteil
- 9.4: Stützteil
- 10: Querverstrebung
- 11: Halteclip
- 12: Verstrebung (Unterseite Bauteil)
- 13: Behälter
- 14: Feder
- 15: Wandung
- 16: Mittelteil
- 17: Anti-Rutschbereich, Bereich

## Patentansprüche

1. Von Hand bewegbarer, stapelbarer Transportwagen mit einem Fahrgestell (2) an dem Rollen (3) und eine Ladeplattform (7) angeordnet sind, wobei das Fahrgestell (2) ferner zwei an der Rückseite (6) des Wagens (1) befindliche, nach oben gerichtete Holme (4) aufweist, an denen eine Schiebeeinrichtung (5) angebracht ist, wobei die Ladeplattform (7) mit Öffnungen (8) versehen ist, **dadurch gekennzeichnet, dass** in die Öffnungen (8) Bauteile (9) eingesetzt werden können.

2. Von Hand bewegbarer, stapelbarer Transportwagen nach Anspruch 1, **dadurch gekennzeichnet, dass** die Ladeplattform (7) in das Fahrgestell (2) eingelegt wird und mittels der Holme (4) und Befestigungsmitteln fixiert ist.

3. Von Hand bewegbarer, stapelbarer Transportwagen nach Anspruch 2, **dadurch gekennzeichnet, dass** die Ladeplattform (7) eine Querverstrebung (10) aufweist.

4. Von Hand bewegbarer, stapelbarer Transportwagen nach Anspruch 1, **dadurch gekennzeichnet, dass** die Bauteile (9) wechselbar oder ortsfest in den Öffnungen (8) angeordnet sind.

5. Von Hand bewegbarer, stapelbarer Transportwagen nach einem der vorherigen Ansprüche, **dadurch gekennzeichnet, dass** die Bauteile (9) mittels eines Demontagewerkzeugs wechselbar sind.

6. Von Hand bewegbarer, stapelbarer Transportwagen nach Anspruch 1, **dadurch gekennzeichnet, dass** die Bauteile (9) quadratisch, rechteckig, kreisförmig, dreieckig oder in einer anderen Form ausgeführt sind.

7. Von Hand bewegbarer, stapelbarer Transportwagen nach einem der vorherigen Ansprüche, **dadurch gekennzeichnet, dass** die Ladeplattform (7) und/oder die Bauteile (9) aus PP oder PA hergestellt sind.

8. Von Hand bewegbarer, stapelbarer Transportwagen nach einem der vorherigen Ansprüche, **dadurch gekennzeichnet, dass** die Ladeplattform (7) und/oder die Bauteile (9) mittels eines Spritzgussverfahrens hergestellt sind.

9. Von Hand bewegbarer, stapelbarer Transportwagen nach einem der vorherigen Ansprüche, **dadurch gekennzeichnet, dass** die Ladeplattform (7) 35 Öffnungen (8) aufweist, wobei vorzugsweise 5 quer und 7 längs vorgesehen sind.

10. Von Hand bewegbarer, stapelbarer Transportwagen nach einem der vorherigen Ansprüche, **dadurch gekennzeichnet, dass** als Bauteile (9) z.B. ein Abdeckteil (9.1), ein Behälterteil (9.2), ein Anti-Rutschteil (9.3) oder ein Stützteil (9.4) Einsatz finden.
